(19) Europäisches Patentamt
European Patent Office
Office européen des brevets

(11) **EP 2 528 322 A2**

(12) **EUROPEAN PATENT APPLICATION**

(43) Date of publication:
**28.11.2012 Bulletin 2012/48**

(51) Int Cl.:
**H04N 5/445** *(2011.01)*     **H04N 5/76** *(2006.01)*
**H04N 5/782** *(2006.01)*

(21) Application number: **12168300.7**

(22) Date of filing: **16.05.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **08.03.2012 KR 20120024033**
**23.05.2011 GB 201108620**

(71) Applicant: **Samsung Electronics Co., Ltd.**
**Suwon-si, Gyeonggi-do, 443-742 (KR)**

(72) Inventor: **Alder, Christopher Mark**
**Staines, Middlesex TW18 4QE (GB)**

(74) Representative: **Clark, David James**
**Appleyard Lees**
**15 Clare Road**
**Halifax**
**HX1 2HY (GB)**

(54) **Method for recording broadcast contents and broadcast receiving apparatus thereof**

(57)     A method for recording content is provided. The method includes selecting a content group for recording broadcast content, assigning a preset score to the selected content group based on a recording-related history of broadcast content belonging to the selected content group, assigning a priority to the selected content group based on the assigned scores, and scheduling a recording of the broadcast content based on the assigned priority.

# FIG. 13

EP 2 528 322 A2

**Description**

<u>**BACKGROUND**</u>

1. Field

Methods and apparatuses consistent with the exemplary embodiments provided herein relate to recording broadcast content and a broadcast receiving apparatus applying the same, and more particularly, to a broadcast content recording method which manages the broadcast content on a group-wise basis, and a broadcast receiving apparatus applying the same.

2. Description of the Related Art

Viewers today are provided with a variety of broadcast content on broadcast receiving apparatuses supported by the recently advanced technology. They can watch a broadcast on time or record the broadcast content and view it later.
When the viewer records broadcast content to view it later, it is a cumbersome process for the viewer to set a record mode for each of the broadcast content or their sequels. Convenience of the viewer will be improved if the viewer is able to set a record mode for an initial content or a content group containing a plurality of content only once and then the record mode is automatically set for all the corresponding broadcast content included in the content group.
Therefore, the question is how the numerous broadcast content and the content groups each containing a plurality of broadcast content are efficiently managed so that the recording is scheduled. This question is particularly important when the viewer wishes to record a plurality of content and a content group.

<u>**SUMMARY**</u>

Exemplary embodiments of the present inventive concept overcome the above disadvantages and other disadvantages not described above. Also, the present inventive concept is not required to overcome the disadvantages described above, and an exemplary embodiment of the present inventive concept may not overcome any of the problems described above.
According to an exemplary embodiment, a technical objective is to provide a broadcast content recording method which is capable of automatically scheduling and recording broadcast content using content groups, and a broadcast receiving apparatus applying the same.
According to an exemplary embodiment, a method for recording content may include selecting one or more content groups for recording of a broadcast content, assigning preset scores to the selected content groups based on a recording-related history of broadcast content belonging to the selected content groups, assigning priorities to the selected content groups based on the assigned scores, and scheduling recording of the broadcast content based on the assigned priorities.
The recording-related history of the broadcast content may include at least one of: recording history of the broadcast content, viewing history of the broadcast content, and history of the broadcast content being deleted without being viewed. The assigning the preset scores may include assigning preset scores to the content groups based on the number of broadcast content which belong to the selected content groups and which have the recording-related history.
The method may additionally include changing the priorities of the content groups, if at least one event occurs from among: recording, viewing, deleting of broadcast content, scheduling for broadcast content recording, and an elapse of preset time interval.
The method may additionally include setting the priority of at least one content group from among the selected content groups according to a user's command, wherein the priority of the at least one content group set by the user's command is designated as a default priority.
If at least two broadcast content have overlapping broadcast times, the scheduling may include scheduling recording of the broadcast content according to order of priorities of the content groups to which the two broadcast content belong.
The method may additionally include receiving the scheduled broadcast content, and recording the received broadcast content, wherein the recording may include if storage space for recording the scheduled broadcast content is insufficient, comparing the priority of the content group to which the scheduled broadcast content belongs, with the priority of the content group to which previously-recorded broadcast content belongs, and deleting at least one previously-recorded broadcast content having lower priority than the priority of the content group to which the scheduled broadcast content belongs.
The method may additionally include receiving the scheduled broadcast content, and recording the received broadcast content, wherein the recording may include if storage space for recording the scheduled broadcast content is insufficient, comparing the content score of the content group to which the scheduled broadcast content belongs, with the content score of the content group to which previously-recorded broadcast content belongs, and deleting at least one previously-recorded broadcast content having lower content score than the content score of the content group to which the scheduled broadcast content belongs.

The content score may be assigned based on at least one of: frequency of viewing broadcast content; priority of the content group to which the broadcast content belongs; and duration of time the broadcast content has been stored at the storage unit.

If at least one content group has a plurality of priorities of different levels, the method may additionally include setting the priority of the highest level as the priority of the corresponding content group. The plurality of priorities may have the priority levels in the order of: the priorities given by a user, priorities given by a broadcasting company or a content maker, and priorities given based on the recording-related history.

According to another exemplary embodiment, a broadcast receiving apparatus is provided, which may include a user interface unit through which one or more content groups for recording of a broadcast content are selected, a control unit which assigns preset scores to the selected content groups based on a recording-related history of broadcast content belonging to the selected content groups, and assigns priorities to the selected content groups based on the assigned scores, and a scheduling unit which schedules recording of the broadcast content based on the assigned priorities.

The recording-related history of the broadcast content may include at least one of: recording history of the broadcast content, viewing history of the broadcast content, and history of the broadcast content being deleted without being viewed.

The control unit may assign preset scores to the content groups based on the number of broadcast content which belong to the selected content groups and which have the recording-related history.

The control unit may change the priorities of the content groups, if at least one of event occurs among: recording, viewing, deleting of broadcast content, scheduling for broadcast content recording, and an elapse of preset time interval.

The user interface unit may set the priority of at least one content group from among the selected content groups according to a user's command, wherein the priority of the at least one content group set by the user's command may be designated as a default priority.

If at least two broadcast content have overlapping broadcast times, the control unit may schedule recording of the broadcast content according to order of priorities of the content groups to which the two broadcast content belong.

The broadcast receiving apparatus may additionally include a receiving unit which receives the scheduled broadcast content, and a storing unit for cording the received broadcast content, wherein if storage space for recording the scheduled broadcast content is insufficient, the control unit may control the broadcast receiving apparatus so that the priority of the content group to which the scheduled broadcast content belongs, is compared with the priority of the content group to which previously-recorded broadcast content belongs, and at least one previously-recorded broadcast content having lower priority than the priority of the content group to which the scheduled broadcast content belongs, is deleted.

The broadcast receiving apparatus may additionally include a receiving unit which receives the scheduled broadcast content, and a storing unit for recording the received broadcast content, wherein if storage space for recording the scheduled broadcast content is insufficient, the control unit may control so that, the content score of the content group to which the scheduled broadcast content belong, is compared with the content score of the content group to which previously-recorded broadcast content belongs, and at least one previously-recorded broadcast content having lower content score than the content score the content group to which the scheduled broadcast content belongs, is deleted.

The content score may be assigned based on at least one of: frequency of viewing broadcast content; priority of the content group to which the broadcast content belongs; and duration of time the broadcast content has been stored at the storage unit.

If at least one content group has a plurality of priorities of different levels, the broadcast receiving apparatus may additionally include setting the priority of the highest level as the priority of the corresponding content group.

The plurality of priorities may have the priority levels in the order of: the priorities given by a user, priorities given by a broadcasting company or a content maker, and priorities given based on the recording-related history.

In various embodiments, the content groups are selected and the broadcast content belonging to the content groups are recorded automatically. Accordingly, user convenience increases. Further, if the broadcast content has overlapping broadcast time, or storage space is insufficient for the recording, the broadcast content may be recorded according to user preference.

According to the present invention there is provided an apparatus and method as set forth in the appended claims. Other features of the invention will be apparent from the dependent claims, and the description which follows.

## BRIEF DESCRIPTION OF THE DRAWINGS

The above and/or other aspects of the present inventive concept will be more apparent by describing certain exemplary embodiments of the present inventive concept with reference to the accompanying drawings, in which:

FIG. 1 is a view illustrating a graphic user interface (GUI) for selecting content groups, according to an exemplary embodiment;
FIG. 2 is a flowchart provided to explain a method for giving priority to the content groups, according to an exemplary embodiment;
FIG. 3 is a flowchart provided to explain a method for scheduling recording of broadcast content, according to an exemplary embodiment;
FIG. 4 is a flowchart provided to explain a method for deleting recorded content, according to an exemplary embodiment;
FIG. 5 is a flowchart provided to explain a process of giving priority, according to an exemplary embodiment;
FIG. 6 is a flowchart provided to explain a method for deleting recorded content, according to an exemplary embodiment;
FIG. 7 is a view illustrating a GUI displaying the selected content groups according to the priority, according to an exemplary embodiment;
FIG. 8 is a view illustrating a process of changing priority of the content groups on a GUI, according to an exemplary embodiment;
FIG. 9 is a flowchart provided to explain a method for scheduling recording of broadcast content, according to another exemplary embodiment;
FIG. 10 is a block diagram of a broadcast receiving apparatus according to an exemplary embodiment;
FIG. 11 is a block diagram of a broadcast receiving apparatus according to another exemplary embodiment;
FIG. 12 is a block diagram of a broadcast receiving apparatus 1100 according to yet another exemplary embodiment; and
FIG. 13 is a flowchart provided to explain a content recording method according to an exemplary embodiment.

## DETAILED DESCRIPTION OF EXEMPLARY EMBODIMENTS

Certain exemplary embodiments of the present inventive concept will now be described in greater detail with reference to the accompanying drawings.

In the following description, same drawing reference numerals are used for the same elements even in different drawings. The matters defined in the description, such as detailed construction and elements, are provided to assist in a comprehensive understanding of the present inventive concept. Accordingly, it is apparent that the exemplary embodiments of the present inventive concept can be carried out without those specifically defined matters. Also, well-known functions or constructions are not described in detail since they would obscure the inventive concept with unnecessary detail.

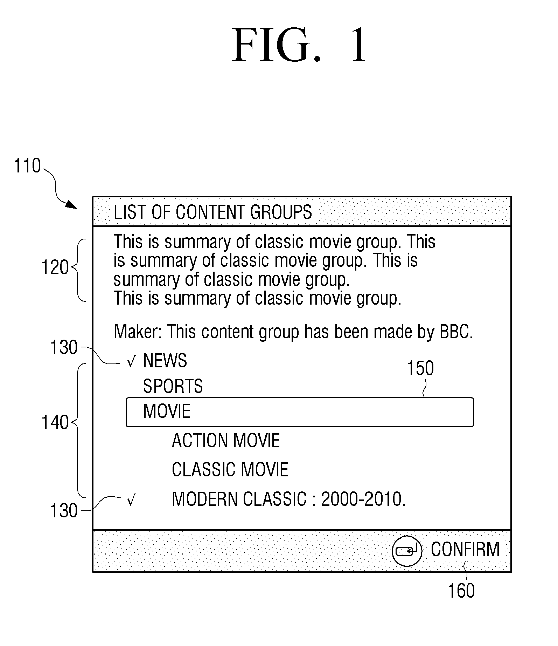

FIG. 1 is a view illustrating a graphic user interface (GUI) for selecting content groups, according to an exemplary embodiment.

Referring to FIG. 1, the GUI may be displayed on the broadcast receiving apparatus, or alternatively, displayed on a display apparatus connected to the broadcast receiving apparatus. The GUI may be implemented as a "content group" arrangement screen 110 through which a viewer can select or un-select a content group. Specifically, the GUI may indicate a plurality of content groups 140 including "news", "sports", or the like.

The plurality of content groups may be arranged hierarchically. By way of example, the content group "movies" may include, as its sub-groups, "action movies" or "classic movies".

The viewer may control the GUI provided on the screen through a user interface unit which is provided to select or un-select the content group. By way of example, the GUI applies highlighting 150 on "movies" content group in FIG. 1. Brief notes or a summary 120 about the highlighted content group may appear above the list of content groups. The viewer may select or un-select the content groups by controlling the GUI through the user interface. By way of example, 'tick' icons 130 indicate that the viewer is checking on "news" and "modern classic: 2000-2010" content groups in the process of selecting content groups. The content groups with the tick marks may then be selected as the viewer inputs a confirm icon 160 through the user interface. If the content group has sub-groups, all the sub-groups may be selected in response to selecting the upper content group.

A confirm icon 160 is used to select the content groups indicated with the tick icons. The content groups may be selected by a user's command. Alternatively, the content groups may be selected automatically. By way of example, the content groups may be selected according to the user's preference based on the history of recording.

Once the content groups are selected, content may be recorded automatically. That is, once the content groups are selected, broadcast content belonging to the selected content group may be recorded. By way of example, the broadcast receiving apparatus may identify the content groups of the broadcast content, monitor the data regarding the broadcast content belonging to the selected content group and record the broadcast content.

The content group may be included in the content data which contains information about the broadcast content, such as content guide data. The content group may be defined by the metadata which is transmitted by broadcast channels. The metadata may include an identifier to identify each content group, and title and summary to describe the content group. The metadata may be based on TV-Anytime XML model of the standard TS 102 822-3-1, and received and processed at the receiving apparatus. Further, the content data of the broadcast content may include identification data to identify the content groups contained in the broadcast content. By way of example, the identification data included in the "world news" content may be related to "news" content group. The content data of the broadcast content may additionally include beginning time, duration, title and summary of the content. The broadcast content and/or content group data may be supplied individually from the "off-schedule" content data, along with the un-scheduled content. The "off-schedule" content may be programmed as on-demand content, to be provided upon request by the viewer. The content and/or content group data may be supplied from the broadcast using broadcast channels through which data is supplied through wired or wireless network connections, or other types of connections. For example, the content and/or content group data may be supplied from a server which is used to supply the content and/or content group data. The receiving apparatus may communicate with the server which uses the protocols available in the corresponding technical field, to acquire the data. There may be indirect relativity between the content group and the broadcast content. For example, some data may be related to the content group identifier. If the viewer selects a content group, the receiving apparatus may monitor the broadcast content belonging to the content group, and as soon as the broadcast content is tracked, broadcast content recording is automatically scheduled using data such as starting time, duration, etc.

In one embodiment, one or more broadcast content broadcasting companies may supply the lists of content groups and broadcast content belonging to the respective groups with the tables of the control data or data fragment contained in the broadcast data stream. By way of example, the control data may be based on the Digital Storage Media Command and Control (DSM-CC) standard defined in the Moving Picture Experts Group (MPEG). Under DSM-CC system, broadcast content belonging to content groups may be contained in the Push Download Program (PDP) fragment and identified by the Content Reference Identifier (CRID). Similarly to the Uniform Resource Locator (URL) which identifies the unit of content in the broadcast stream, the CRID is the only identifier available internationally. The content may be defined as "On-Schedule" or "Off-Schedule". "On-Schedule" indicates that the CRID mentioned in the PDP fragment solves entry of the Event Information Table (EIT). In this case, the receiving apparatus may find the EIT cache. That is, the cache of the EIT data is stored based on the control data received from the broadcast stream. When the receiving apparatus finds the CRID of the content belonging to the selected content group, the receiving apparatus schedules or checks the content to be recorded. The receiving apparatus may retrieve or use the metadata or the content from the EIT, such as, title, summary, starting time, etc. The "Off-Schedule" event does not exist in the table that constructs the EIT. Accordingly, the receiving apparatus may schedule the content belonging to the selected content group based on the starting time and location, as described in the PDP fragment. In both cases, it is possible to retrieve the content metadata from additional content information fragments.

Under DSM-CC system, the content group and/or content data may be supplied as a part of the periodically-supplied data. The content data, which is embedded in the broadcast stream and continuously supplied, may be retrieved whenever the receiving apparatus tunes to the stream. In this case, it is possible to use the content group and/or content information by monitoring the periodically-supplied data at predetermined intervals, e.g., every ten minutes. The content information may be used to supply the content group data to identify the selected content groups. If registered "On-Schedule", the receiving apparatus may automatically monitor the EIT cache.

The content groups represent the content which is grouped using the content data regarding genre or theme. In general cases, the content data is set by the content maker, rather than by the broadcasting companies. However, the content data may also be generated by using other databases. Various content data may hinder grouping of the content. This can hinder grouping of content with similar themes, except for a few content groups such as "Last week's best TV". One broadcast content may preferably be included in one content group. That is, the content included in the content group may have only one genre or theme.

While the content group may be useful to the viewer, this may also raise a problem. The content groups may include numerous types of broadcast content and there may be numerous content groups. This is problematic when considering limited hardware resources. By way of example, a broadcast receiving apparatus may be limited according to its ability to modulate a broadcast stream or channel. Accordingly, events contained in different content groups can conflict. For example, the broadcast content "world news" belonging to "new" content group may partially or entirely overlap with the broadcast time of the movie "adaptation" of the content group "modern classic: 2000-2010". If the receiving apparatus has one tuner for receiving a broadcast signal, only the broadcast stream is tuned and decoded, and this means that only one broadcast of the broadcast content can be recorded. It would not be desirable to require user's command to solve the conflict of recordings. The conflict of recordings can occur in any broadcast content scheduling, and if the viewer has to input a command while he or she is watching the broadcast, the viewer will not be able to enjoy the content due to the GUI.

If the receiving apparatus has a storage unit to record the broadcast content, available storage space can be rapidly consumed while using the content groups. When the storage device is full, it is not possible to continue recording any more unless the viewer himself deletes the recorded content. Accordingly, it is necessary to solve the above-explained problems.

In various exemplary embodiments, an apparatus and a method for solving these problems are provided. For example, it is possible to give priority to the content groups and control receiving apparatus accordingly. When resources conflict, the priorities can be used to solve the conflict and select the appropriate broadcast content.

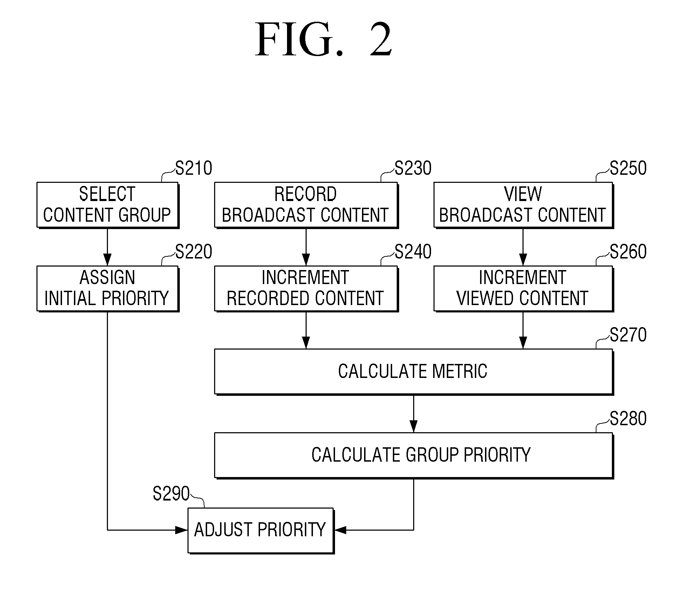

FIG. 2 is a flowchart provided to explain a method for giving priority to the content groups, according to an exemplary embodiment.

At S210, the viewer selects a content group. That is, the viewer selects a content group to automatically record broadcast content. A GUI as the one illustrated in FIG. 1 may be implemented. In another embodiment, the selecting the content group may be performed automatically on behalf of the viewer, according to user preference data.

Operations at S220 to S290 relate to a method for giving priority to a content group. That is, priority may vary depending on time. The steps are illustrated in FIG. 2 only as examples, and additional steps may be provided or some steps may be omitted.

At S220, priorities are given and initialization is carried out. This provides first priority to the newly-selected content group. The first priority may be given according to present criteria. By way of example, priorities that are not yet given to the other selected content groups, or the lowest priority among the selected content groups may be given. The initialization may include generation of count values and initialization of these values to, for example, 0.

Operations at S230 to S290 may be carried out anytime after the initialization at S220. Operations at S230 to S290 may reiterate, if a preset event occurs. The preset event may include at least one of recording, viewing, deleting of broadcast content, scheduling for broadcast content recording, and an elapse of a preset time interval.

At S230, broadcast content is recorded. The recorded content may be one of the content belonging to the broadcast content group selected at S210. At S240, a count value increments regarding the recorded content group. The count value may correspond to the number of recorded content belonging to the selected content group. Accordingly, the count value may be updated whenever the broadcast content of the content group is newly recorded. The increment of the count value may occur directly upon recording of the content, or indirectly based on the storage history or records.

Operations at S250 and S260 may be carried out in a similar manner as those at S230 and S240. At S250, the content belonging to the selected content group is viewed, and at S260, the count value of the viewed content of the content group may be incremented. The count value may correspond to the number of viewed content of the selected content group. Several criteria may apply to determine that the content is viewed. By way of example, it may be determined that the content is viewed when a user views the content from the start to the end, or when a user views the content for more than a preset time compared to the total play time of the content. Accordingly, content may not be considered to have been viewed if viewed only for several minutes.

At S270, metric is calculated based on the count value. The metric represents user's preference of the content group. The metric is the function of the count value at S240 and S260. Other values may also be used to calculate the metric. The metric may be a content group score or also calculated as a percentage. In one embodiment, the metric may be obtained by dividing the number of recorded content by 100, and multiplying by the number of viewed content. In another embodiment, the metric may be obtained by dividing the number of recorded content of the content group compared to the total number of recorded content, by the number of all the recorded content, and multiplying by 100. Other functions may be implemented as need arises.

At S280, priority of the content group selected at S210 is calculated based on the calculated metric. At S290, the priority of the selected content group may be adjusted. Adjusting the priority may include numbering the selected content groups according to the metrics, and giving different priorities to the respective numbered content groups. By way of example, if there are 10 selected content groups, priorities from 0 to 9 may be given to the respective groups. Priority 9 may represent the highest priority. That is, priority 9 may be given to the content group with the highest metric. The priorities may be given in various manners. By way of example, priority 0 may represent the highest priority. However, the exemplary embodiments are not limited to the specific examples given above.

Meanwhile, although it is described that the priority of the content group is calculated and adjusted at S280 and S290, these steps may be interpreted as one step to give priority to the content group based on the calculated metric, i.e., based on the content group score. The operations at S230 to S290 may reiterate once the priorities are given. That is, the priorities may change when the operations at S230 to S290 reiterate. Specifically, if at least one of the events including recording, viewing, deleting of broadcast content, scheduling of broadcast content recording, and an elapse of a preset time interval occurs, the priorities may change as a result of reiterating the operations at S230 to S290.

Meanwhile, if the metric of a certain content group is updated, at S280, it may be determined whether to change the numbering of the content groups. By way of example, only one from among the content groups may change the priority based on the updated metric, and if two content groups exchange priorities, at S290, it may be necessary to adjust only one subset of the priorities of the content group. Operations at S280 and S290 enable all the selected content groups to have unique priority values of their own.

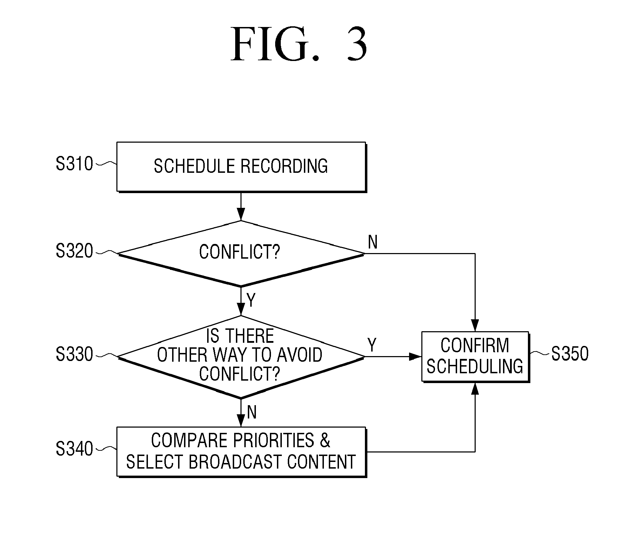

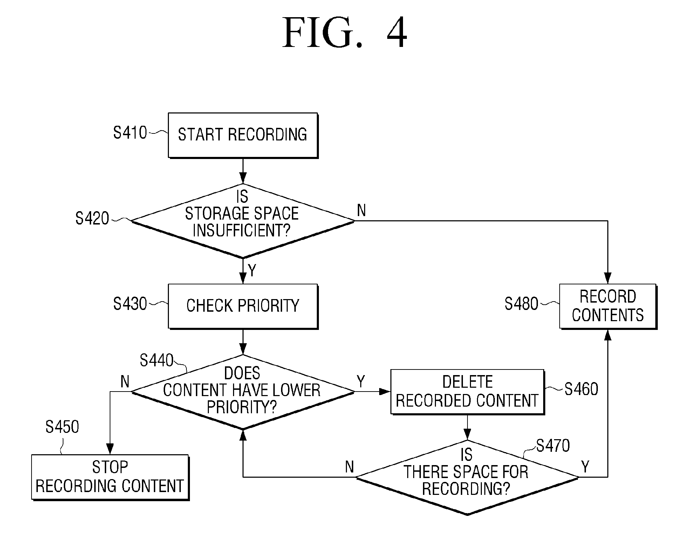

FIGS. 3 and 4 illustrate an exemplary embodiment of using priority of the content group to solve conflicts which may occur in the process of recording the broadcast content.

FIG. 3 is a flowchart provided to explain a method for scheduling recording of broadcast content, according to an exemplary embodiment, and FIG. 4 is a flowchart provided to explain a method for deleting recorded content, according to an exemplary embodiment.

Referring to FIG. 3, at S310, recording of the broadcast content belonging to the selected content group is scheduled. If a preset time elapses or preset event occurs, the broadcast receiving apparatus may search content guide data for broadcast content belonging to the selected content group, or monitor over-the-air signal which indicates availability of the receiving apparatus to receive the content belonging to the content group. Operation at S320 may be performed during a search for first content belonging to the selected content group. At S320, possibility of conflicts is considered between the first content to be scheduled for recording and other content. At S350, scheduling is confirmed if there is no conflict. Operation at S330 is performed if there is a conflict. The conflict may occur if the first transmission time of the first content belonging to the first content group partially or entirely concurs with the second transmission time of the second content belonging to the second content group. The second content may be indicated in the registered recording schedule. By way of example, if there is no conflict, the second content may be scheduled for recording according to operations S310, S320 and S350. At S330, another method for avoiding conflict may be found. By way of example, the conflicting content may be broadcast at different times of day over the same or different broadcast channels. If there is different broadcast time for the conflicting content, this can be scheduled at S350. The above process may reiterate to avoid conflict of the content. If there is no different broadcast time for the conflicting content, i.e., if there is no specific method for avoiding conflict, operation at S340 is performed. The priority of the first content group may be compared with the priority of the second content group, and one from among the first and second content may be selected accordingly. By way of example, if the first content group has higher priority than the priority of the second content group, the first broadcast content may be selected; if the second content group has higher priority than the first content group, then the second broadcast content may be selected. As a result, the scheduling for the selected content is confirmed at S350. The method according to FIG. 3 may be reiteratively applied in the respective broadcast content belonging to the content group. Alternatively, the method may be carried out in relation to the list of broadcast content indicated in the broadcast data, irrespective of time. In this manner, the broadcast content belonging to the content group of higher priority may be scheduled prior to the broadcast content belonging to the content group of lower priority.

FIG. 4 is a flowchart illustrating a method for resolving a conflict of storage spaces according to an exemplary embodiment. The method of FIG. 4 may be implemented in a broadcast receiving apparatus. At S410, the broadcast receiving apparatus records scheduled broadcast content. This may be implemented not only at the beginning of the recording, but also during scheduling of the recording. At S420, the receiving apparatus may set environments for determining the amount of storage space available for the content recording. As explained above, the broadcast receiving apparatus may include a storage unit. Meanwhile, the storage unit may be implemented as an external storage device connected to the broadcast receiving apparatus, to store the recorded broadcast content. The storage unit may be implemented as a digital or analogue storage medium including a magnetic disk, flash memory, or tape. At S420, it is determined if the storage unit has insufficient storage space. As used herein, the 'insufficient storage space' may refer to when the available storage space is below a preset reference. The preset reference may be defined by a time unit or a byte unit. The preset reference may be set to a minimum storage space required for recording scheduled broadcast content. If there is storage space, i.e., if there is sufficient storage space to store broadcast content, at S480, the broadcast content may be recorded. However, if the storage space is insufficient, i.e., if the storage space is below the preset reference, the operation at S430 is performed.

Operation at S430 analyzes the priorities given to the content group to which the recorded broadcast content belongs. This may include checking the priority of the content group for all the recorded broadcast content, or checking the priority of the content group only for some of the broadcast content that meets preset criteria (e.g., top 10 broadcast content with longer recording and storage time). At S440, the analyzed content group priorities of the broadcast content are compared with the priority of the content group to which the content to be recorded belongs to. If there is content with lower content group priority among the recorded broadcast content, at S460, the corresponding content is deleted from the storage apparatus. At S470, it is determined if sufficient storage space is ensured to record the scheduled broadcast content as a result of deleting the broadcast content. The operations at S440 and S460 may reiterate, if it is determined that the storage space is not yet sufficient to record the scheduled content. If it is determined that the storage space is sufficient to record the scheduled content, at S480, the scheduled content is recorded. Meanwhile, at S440, if there is no content having the lower content group priority among the recorded broadcast content than the scheduled broadcast content, or if the storage space is not sufficient to record the scheduled content even after deleting all the broadcast content with the lower content group priorities, at S450, recording of the scheduled content is stopped.

According to the method of FIG. 4, the content group priority of the scheduled broadcast content may be compared with the content group priority of the recorded broadcast content, and if the scheduled broadcast content belongs to the content group of the higher priority, the broadcast receiving apparatus may delete the recorded content belonging to the content groups with the lower scores automatically, i.e., without requiring user command.

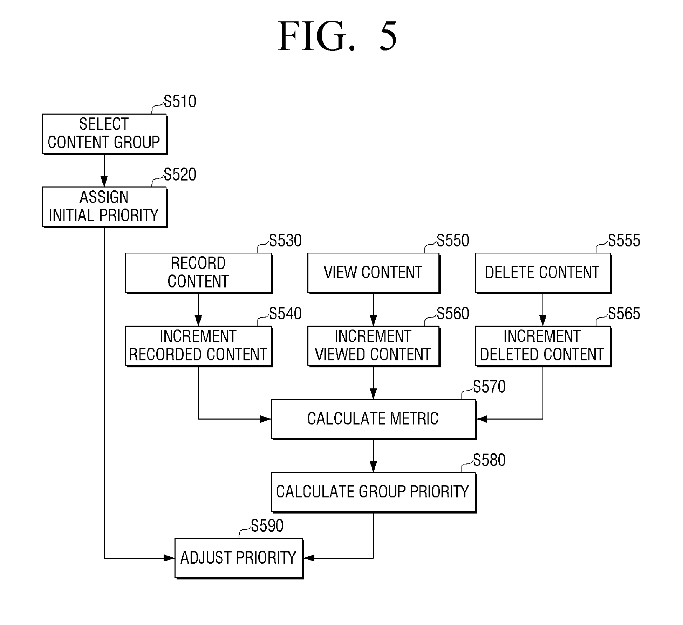

FIG. 5 is a flowchart illustrating the process of giving priorities according to an exemplary embodiment. The method of FIG. 5 is an extension from the method illustrated in FIG. 2. The operations at S510, 520, 530, 540, 550, 560, 570, 580, 590 are similar to the operations at S210 to S290 of FIG. 2. The only difference lies in the metric calculation operation at S570 in which the method of FIG. 5 considers the content which are recorded, but deleted without being viewed. At S555, the stored content is deleted. Specifically, the content is recorded and stored, but deleted without being viewed. Accordingly, the count value of the number of deleted content of the corresponding content group increments at S565. At S570, the number of deleted content may be considered when calculating the content group score or metric. By way of example, the metric may be calculated by:

(number of recorded content / 100) * (number of viewed content – number of deleted content)

By using the number of content, which are deleted without being viewed, in the calculation of metric, content group priority may be given in a manner different from that of FIG. 2. That is, the fact that a content group has a large number of content that has been recorded but deleted without being viewed indicates low user preference to the content group, and accordingly, content group priorities may be given differently from that of FIG. 2. Meanwhile, although not illustrated in FIG. 5, the recorded and unviewed content, which have been stored for a long period of time but not viewed at all, may also influence the calculation of the metric. By way of example, those that may be taken into consideration may include the duration between the time at which the content is recorded and stored at the storage unit and the time at which the content is viewed. Accordingly, the content group priority may represent the user's preference regarding the content groups. That is, while the content groups including content that is viewed once in a while or deleted without being viewed may have lower priorities, the content groups including broadcast content that are frequently viewed and not deleted by the user may have higher priorities. The method according to FIGS. 2 and 5 may efficiently give content group scores to the content groups based on the recording-related history of the broadcast content belonging to the content groups. The 'recording-related history' may include recording of broadcast content, recording and deleting without viewing, or time between recording and viewing. The content group score may be used for giving priorities to the content groups.

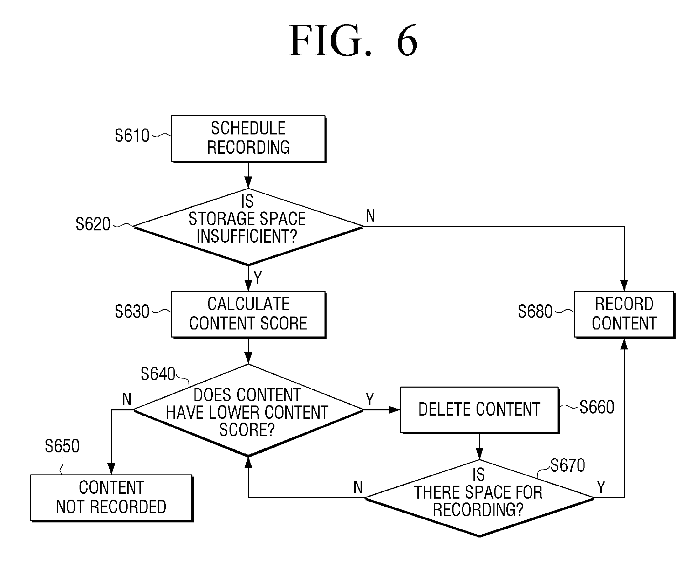

FIG. 6 is a flowchart illustrating a method for deleting stored content according to another embodiment. The method according to FIG. 6 is similar to the method according to FIG. 4. The operations at S610 to S680 of FIG. 5 correspond to the operations at S410 to S480 of FIG. 4. The only difference is that the content score of the broadcast content is used instead of the content group priority of the content group. The content score is based on the characteristics of the content, and is the function of the content group priority which is calculated by effectively placing weight on the priority of the content group to which the content belongs. The content score may be calculated based on one of: the content group priority of the content group to which the content belongs, frequency of viewing the content, time for storing the content, if the content has not been viewed at all, and time since the content was broadcast. By way of example, the content score may be calculated by:

If content is viewed:

Content score = content group priority * frequency of viewing.

If content is not viewed:

Content score = content group priority / time for storing the content.

The shortage of storage space due to the presence of content group having a plurality of broadcast content may be avoided by using the content score. That is, it is possible to prevent the broadcast content belonging to the content group of higher priorities predominantly occupying the space of the storage apparatus.

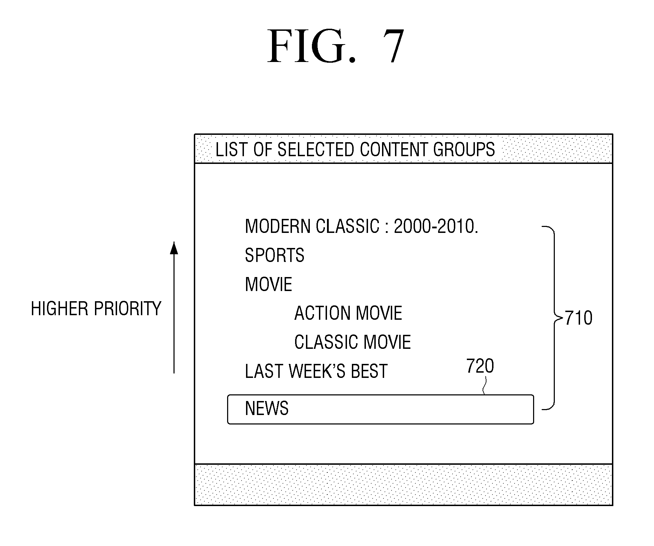

FIG. 7 is a view illustrating a GUI which displays the selected content group according to corresponding priorities, according to an exemplary embodiment.

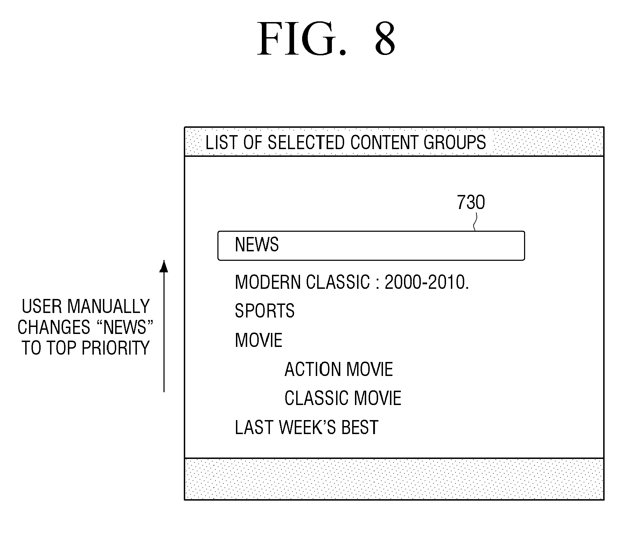

The GUI of FIG. 7 may display the selected content groups in the form of list 710 which is arranged according to record list priority. If a scroll bar is used, this list may include the other selected content groups which are not displayed on screen. Further, if there are seven selected content groups as illustrated in FIG. 7, in one example, beside the initial priority 0 to be given to a newly selected content group, priority, the content group on the top, i.e., "Modern classic: 2000-2010" may have priority 7, while the content group on the bottom of the list, i.e., "News" may have priority 1. However, an embodiment is not limited to the specific example explained above. Accordingly, the priorities may be given in various methods. Meanwhile, FIG. 7 illustrates only an example, and a different GUI may be used to display the content groups according to the given priorities. As will be explained in detail with reference to FIG. 8, the user may change the given priorities of the respective content groups on the GUI. Further, the display screen may be constructed in a text-based manner, instead of a GUI. Further, the GUI may be supplied not only to the broadcast receiving apparatus, but also to the external device such as mobile terminal to receive user input on the external device regarding change of priorities, etc. This user input may later be transmitted to the broadcast receiving apparatus via TCP/IP network, etc.

FIG. 8 is a view illustrating a process of changing priorities of the content groups on the GUI, according to an embodiment.

The user may input user command using a user input device such as a remote controller with respect to the GUI of FIG. 7. According to FIG. 7, on the current GUI, the content group "News" 720 is selected. In selecting the content group, the user may change the location of the selected group on the displayed list, by pressing a direction button on the input device. FIG. 8 illustrates a result shown when the user moves the content group 720 of FIG. 7 to the top 730 of the content group list. This may be performed by repeatedly pressing the direction button on the user input device. After the location of the content group is changed, the content group "News" is given priority 7 and the content group "Modern classic: 2000-2010" is given priority 6. The location of the content group may be moved both upward and downward.

In one embodiment, if the user changes the priority given to the content group, such priority given by the user may be excluded from the subject of the priority changing process. That is, the priority given by the user may be set as default. The priority given by the user may have priority over the automatically-assigned priorities. That is, if the content group "News" is changed to the top of the content group list by the user, the content group "News" may remain at the top even when the priorities of the content groups are changed by recording, viewing or deleting of the content. Therefore, "News" may have the highest priority irrespective of the priority change of the other content groups. Accordingly, the priorities changed by the user at the "priority adjusting" operation at S290 or S590 of FIGS. 2 and 5 may have fixed priorities. For example, only "News" may have a priority of 7.

Meanwhile, the user may delete some of the selected content groups through the GUI of FIG. 7. If the user deletes a content group, i.e., if the user does not wish to automatically record the broadcast content belonging to such group, the content group priority does not apply anymore. The recorded content belonging to the deleted content group which is stored at the storage unit may be treated as being directly recorded by the user. Therefore, the method of FIG. 4 or FIG. 6 may not apply.

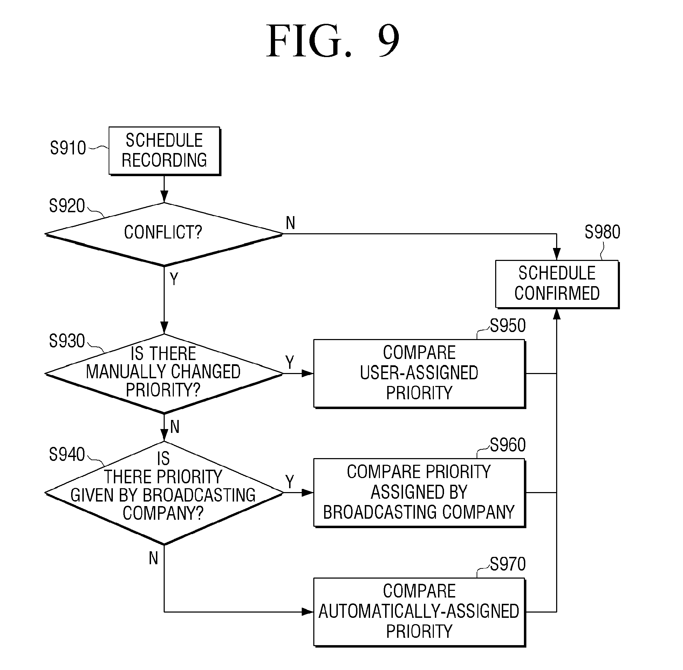

FIG. 9 is a flowchart illustrating a method for scheduling recording of broadcast content according to another exemplary embodiment.

Referring to FIGS. 2 and 5, the priorities of the content groups are automatically given by the broadcast receiving apparatus, i.e., the priorities are given based on the recording-related history. However, the priorities of the content groups may also be given by the broadcasting company or broadcast content maker. The content group priority may be transmitted to the broadcast receiving apparatus in the form of metadata. Alternatively, the content group priority may be transmitted via a server in a network such as a local network, a wide-area network, or a telecommunication network through which the receiving apparatus can communicate. The priority given by the broadcasting company or the broadcast content maker may be given as a replacement of, or in addition to the automatically-given priorities or priorities given by the user. That is, the content groups may concurrently have a plurality of priorities depending on the manner of assigning priorities. Even when each content group has only one priority, the method according to FIGS. 3, 4 and 6 may still apply. However, the method according to FIG. 9 may apply when the content group has a plurality of priorities.

The operations at S910 and S920 of FIG. 9 are similar to those at S310 and S320 of FIG. 3. At S910, the broadcast content is scheduled for recording, and at S920, it is determined if a conflict occurs, i.e., it is determined if there is entire or partial overlapping between the broadcast time of the scheduled broadcast content and another scheduled broadcast content. If there is no conflict, the content scheduling is confirmed at S980. If there is a conflict, operation at S930 is performed.

At S930 and S940, presence of each priority is determined in sequence according to the order of priority levels. That is, the priority given by the user has the higher level than the priorities given by the broadcasting company or content maker, and the priority given by the broadcasting company or content maker has a higher level than the automatically-assigned priorities. Different priority levels may also apply. That is, the priorities given by the broadcasting company or content maker may have a higher level than the priority given by the user. At S930, it is determined if there is a user-given priority among the content groups to which conflicting broadcast content belongs. If there is user-given priority, at S950, the priority is compared with the user-given priority, and at S980, the content scheduling of the higher priority is confirmed. If there is no user-given priority, at S940, it is determined if there is priority given by the broadcasting company or content maker. If there is the priority given by the broadcasting company, at S960, the content group priorities of the conflicting content are compared with each other. At S980, the content with higher priority is scheduled. If there is no priority given by the broadcasting company or content maker, the content group priorities of the conflicting content may be compared by using the automatically-assigned content group priorities. These automatically-assigned content group priorities may be instantly calculated at S970 according to FIG. 2, or based on the previously-stored content group priorities. At S980, the scheduling of the broadcast content with higher priority among the conflicting broadcast content is confirmed. If three or more broadcast content conflict, the scheduling of the broadcast content with highest priority may be confirmed. Meanwhile, in another embodiment, the plurality of priority levels may be assigned with priority values which can be compared with each other, or alternatively, the priorities of different levels may be compared by normalizing the respective priority values. Meanwhile, in another embodiment, the plurality of priority levels may be normalized and compared with different priority levels. Accordingly, if the content group has a plurality of content group priorities of different levels, one of the plurality of priorities may be designated as the priority of the content group. By way of example, the plurality of different priorities may be compared and the highest or lowest priority may be designated as the priority of the content group.

The method according to FIGS. 4 and 6 may be implemented in the similar manner as the method according to FIG. 9. Accordingly, at S440 or S640, it is determined whether there are priorities of different levels. By way of example, when the recorded broadcast content are deleted from the storage unit, the priority given by the user may have a higher level than the priority given by the broadcasting company or the content maker, and the priority given by the broadcasting company or the content maker may have higher level than the automatically-assigned priorities. In this manner, and likewise in FIG. 9, the broadcasting company or the content maker does not have predominant right on assigning priorities to the content groups, but simply gives recommendations.

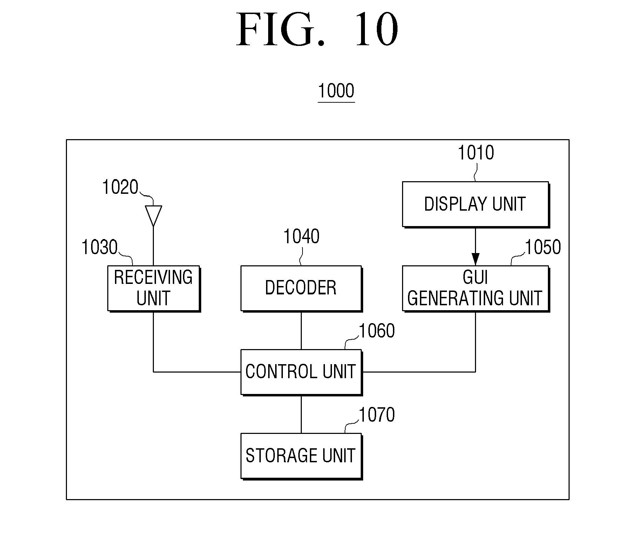

FIG. 10 is a block diagram illustrating a construction of a broadcast receiving apparatus according to an embodiment. The broadcast receiving apparatus 100 in FIG. 10 is only an example, and this may have more or less components.

Referring to FIG. 10, the broadcast receiving apparatus 1000 may include a display unit 1010, an antenna 1020, a receiving unit 1030, a decoder 1040, a GUI 1050, a control unit 1060 and a storage unit 1070. The receiving unit, e.g. receiver, 1030 receives broadcast signal. The broadcast signal may be a terrestrial, cable, satellite, or network signal, or may be received over an antenna (or communication port) 1020. The receiving unit 1300 may include a tuner (not illustrated) to tune to a channel. The receiving unit 1300 may include one or more tuners.

The decoder 1040 decodes the received broadcast signal. The broadcast receiving apparatus may include one or more decoders, and the decoder 1040 may be provided according to Moving Picture Experts Group (MPEG) or Multimedia and Hypermedia Experts Group (MHEG). Signal processing components such as descrambler (not illustrated) or demultiplexer (not illustrated) may also be included.

The GUI generating unit 1050 may generate the GUI as the one illustrated in FIGS. 1, 7 or 8. The display unit 1010 displays the broadcast signal decoded at the decoder 1040. Further, the display unit 1010 may display the GUI generated at the GUI generating unit 1050. Although the display unit 1010 is included in the broadcast receiving apparatus in FIG. 10, this is drawn only for illustrative purposes and may be absent from other exemplary embodiments. For example, the display unit 1010 may be provided as a separate component which is then connected to the broadcast receiving apparatus 1000 for use.

The control unit 1060, e.g. controller, may include a processor and controls the overall constitution of the broadcast receiving apparatus 1000. That is, the control unit 1060 may control the display unit 1010, the antenna 1020, the receiving unit 1030, the decoder 1040, the GUI generating unit 1050 and the storage unit 1070 to perform corresponding operations, respectively.

The storage unit 1070 stores the broadcast content which is scheduled and recorded. The storage unit 1070 may be implemented as a volatile memory or non-volatile memory. Referring to FIG. 10, the storage unit 1070 may be included in the broadcast receiving apparatus 1000. However, in another exemplary embodiment, the storage unit 1070 may be provided separately, such as an external storage device which is then connected to the broadcast receiving apparatus 1000 for use.

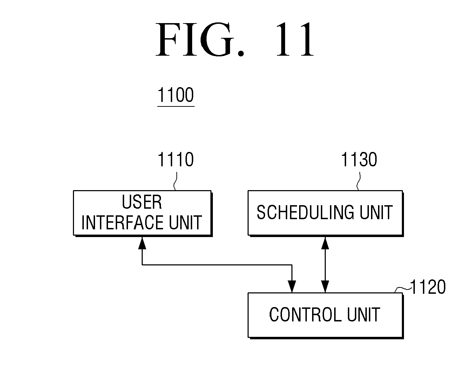

FIG. 11 is a block diagram of a broadcast receiving apparatus according to another exemplary embodiment.

Various devices including a digital TV, a set-top box, a digital video recorder, a personal computer (PC), a laptop computer or mobile terminal may be implemented as the broadcast receiving apparatus 1100.

Referring to FIG. 11, the broadcast receiving apparatus 1100 may include a user interface unit 110, a control unit 1120 and a scheduling unit 1130.

Through the user interface unit 1100, the user may select at least one content group for recording broadcast content. That is, the user may select the content group he or she wishes to record through the user interface unit 1100. Further, it is possible to set the priority of at least one content group among the selected content groups with the user interface unit 1100. That is, the user may set or change the priority of the selected content group. The priority set or changed by the user may be set as default.

The control unit 1120 controls the overall operation of the broadcast receiving apparatus 1100. That is, the control unit 1120 may control the user interface unit 1100 and the scheduling unit 1130 to perform corresponding functions, respectively. In an exemplary embodiment a scheduling unit may be implemented as hardware or a processor.

The scheduling unit 1130 schedules recording of the broadcast content based on the priority given by the control unit 1120. Meanwhile, although the scheduling unit 1130 is a separate element which is included in the broadcast receiving apparatus 1100 in the embodiment explained above, the process of scheduling broadcast content recording may be carried out by the control unit. That is, the scheduling unit 1130 may be included in the control unit 1120 to perform the corresponding function thereof.

Next, the operation of the control unit 1120 will be explained in greater detail.

The control unit 1120 gives a preset score to the content group selected through the user interface unit 1110 based on the recording-related history of the broadcast content belonging to the selected content group, and gives priority to the selected content group based on the given score. As used herein, the 'recording-related history' may be at least one of: recording history of the broadcast content, viewing history of the broadcast content, and history of the broadcast content being deleted without being viewed. Further, while giving a preset score to the selected content group, the control unit 1120 may give the preset score based on the number of broadcast content having the recording-related history.

Meanwhile, if at least one content group has a plurality of priorities of different levels, the priority at the top level may be set as the priority of the corresponding content group. In one embodiment, the plurality of priorities may have priority levels in the order of the priorities given by the user, priorities given by the broadcasting company or the content maker, and priorities given based on the recording-related history. However, the above example is only for illustrative purposes, and accordingly, if there are a plurality of priorities, these may be set based on different priority levels. Since the process of giving priorities is explained in detail above with reference to FIGS. 2, 5 and 9, detailed description thereof will be omitted for the sake of brevity.

The control unit 1120 may change the given priorities. Specifically, the control unit 1120 may change the priority of the content group, upon occurrence of at least one event of broadcast content recording, viewing, deleting, recording scheduling, and an elapse of a preset time. Accordingly, the priority of the content group may change over time, reflecting the user preference toward the content group. As explained above, the priority set or changed by the user may be set as a default.

Further, if at least two broadcast content program have overlapping broadcast times, the control unit 1120 controls so that the recording of the broadcast content is scheduled according to the order of priorities of the content groups to which the broadcast content belong. When the broadcast time overlap, this means that the broadcast time of at least two broadcast content overlap partially or entirely. This has been explained above with reference to FIGS. 3 and 9, and will not be explained repetitiously for the sake of brevity.

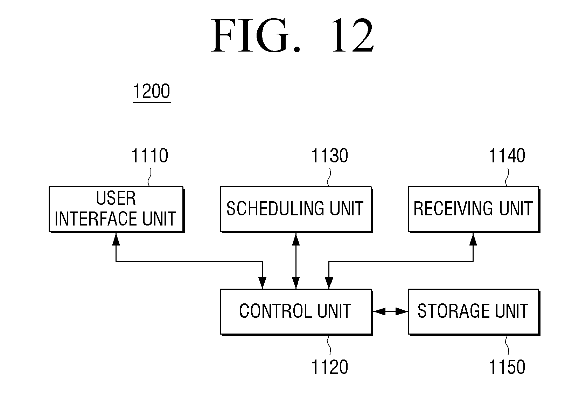

FIG. 12 is a block diagram of a broadcast receiving apparatus 1200 according to another exemplary embodiment.

Referring to FIG. 12, the broadcast receiving apparatus 1200 may include the user interface unit 1110, the control unit 1120, the scheduling unit 1130, and additionally include a receiving unit 1140 and a storage unit 1150.

The receiving unit 1140 receives the broadcast content. The receiving unit 1140 may receive the content from the broadcasting station which sends out the broadcast content using broadcast network. If possible, other forms of communication networks such as the Internet may be used in addition to the broadcast network.

The receiving unit 1140, which receives content from the broadcasting station, may include a tuner (not illustrated), a decoder (not illustrated) or an equalizer (not illustrated). In an embodiment where the content is received from the source such as web server, a network interface card (not illustrated) may be implemented as the receiving unit 1140.

Meanwhile, the receiving unit 1140 may receive metadata, content data or content group data. This data includes broadcast content and information about the content groups. Specifically, the data may include identification information to identify the broadcast content and the content group to which the broadcast content belongs. The control unit 1120 may identify the broadcast content belonging to the selected content group based on the identification information, and may control the broadcast receiving apparatus so that the broadcast content is scheduled using the broadcast information including broadcast time of the identified broadcast content.

The storage unit 1150 records the broadcast content received at the receiving unit 1140. Specifically, if the broadcast content scheduled by the scheduling unit 1130 is received via the receiving unit 1140, the broadcast content may be recorded and stored.

If the storage unit 1150 has insufficient storage space to record the scheduled broadcast content, the control unit 1120 may compare the priority of the content group to which the scheduled broadcast content belongs with the priority of the content group to which previously-recorded broadcast content belongs, and may control so that at least one previously-recorded broadcast content with lower priority than the content group of the scheduled broadcast content is deleted.

Further, if the storage unit 1150 has insufficient storage space to record the scheduled broadcast content, the control unit 1120 compares the content score of the content group to which the scheduled broadcast content belongs with the content score of the content group to which previously-recorded broadcast content belongs, and may control the broadcast receiving apparatus so that at least one previously-recorded broadcast content with lower content score than the content group of the scheduled broadcast content is deleted.

As used herein, the 'content score' may refer to the scores given to respective broadcast content, and this may be given based on at least one of: frequency of viewing broadcast content; priority of the content group to which the broadcast content belongs; and duration of time the broadcast content has been stored at the storage unit.

The operation of the broadcast receiving apparatus 1200 in a situation where the storage unit 1150 has insufficient storage space has already been explained in detail above with reference to FIGS. 4 and 6. Accordingly, repetitious explanation thereof will be omitted for the sake of brevity.

Meanwhile, although the storage unit 1150 is included in the broadcast receiving apparatus 1200 in the exemplary embodiment explained above, in another exemplary embodiment, the storage unit 1150 may be implemented as an external HDD or memory card, such as Flash memory (M/S, XD, SD, etc.) or USB memory which is connectable to the broadcast receiving apparatus 1100.

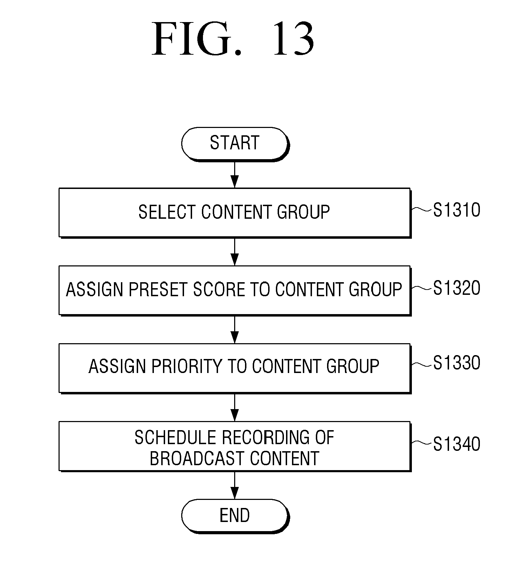

FIG. 13 is a flowchart illustrating a content recording method according to an exemplary embodiment.

First, at S1310, the content group is selected. Specifically, at least one content group may be selected for the recording of the broadcast content. At S1320, a preset score is given to the selected content group. The preset score may be given based on the recording-related history of the broadcast content belonging to the selected content group. The 'recording-related history' may be at least one of: recording history of the broadcast content; viewing history of the broadcast content; and history of the broadcast content being deleted without being viewed. Accordingly, the priorities may reflect the user preference toward the content groups. The operation of giving scores may include giving a preset score to the content group based on the number of broadcast content which belong to the selected content group and which have the recording-related history.

At S1330, priority is given to the selected content group based on the given score. At S1340, recording of the broadcast content is scheduled based on the given priority. If at least two broadcast content have overlapping broadcast times, the scheduling operation at S1340 may include scheduling the recording of the broadcast content based on the order of priorities of the content groups to which the corresponding broadcast content belong.

The content recording method according to FIG. 13 may additionally include the operation of changing the priority of the content group, upon occurrence of at least one event of: broadcast content recording, broadcast content viewing, broadcast content deleting, recording scheduling of the broadcast content, and an elapse of a preset time. Accordingly, the given priorities may be changed dynamically over time.

The operation may additionally include the step of setting the priority of at least one content group of the selected content groups according to a user's command. That is, the given priorities can be changed by the user. The priority of the content group set by the user's command may be designated as a default.

Further, the broadcast content recording method according to FIG. 13 may additionally include the step of receiving the scheduled broadcast content and the step of recording the received broadcast content. If there is insufficient storage space to record the scheduled broadcast content, the recording step may include the steps of comparing the priority of the content group to which the scheduled broadcast content belongs with the priority of the content group to which previously-recorded broadcast content belongs, and deleting at least one previously-recorded broadcast content having lower priority than that of the content group to which the scheduled broadcast content belongs. Further, if there is insufficient storage space to record the scheduled broadcast content, the recording operation may include the steps of comparing the content score of the content group to which the scheduled broadcast content belongs with the content score of the content group to which previously-recorded broadcast content belongs, and deleting at least one previously-recorded broadcast content having lower content score than that of the content group to which the scheduled broadcast content belongs. The content score is given to the respective broadcast content, and this may be given based on at least one of: frequency of viewing broadcast content; priority of the content group to which the broadcast content belongs; and duration of time the broadcast content has been stored at the storage unit. Accordingly, the broadcast content can be recorded according to order of priorities, even when the storage space is not enough.

Further, if at least one content group has a plurality of priorities with different levels, the operation may additionally include the step of setting the priority with the highest level as the priority of the corresponding content group. The plurality of priorities may have priority levels in the order of the priorities given by the user, priorities given by the broadcasting company or the content maker, and priorities given based on the recording-related history.

Since the content recording method according to FIG. 13 has been explained in detail above, the repetitious explanation thereof will be omitted for the sake of brevity.

The methods according to various embodiments may be stored in various types of recording media and implemented by the program code which can be executed by a central processing unit (CPU) or micro-processor provided to an electronic apparatus.

Specifically, the code to carry out the above methods may be stored on various types of nonvolatile recording media including, Flash memory, Read Only Memory (ROM), Erasable Programmable ROM (EPROM), Electronically Erasable and Programmable ROM (EEPROM), hard disk, removable disk, memory card, USB memory, CD-ROM, etc.

The foregoing embodiments and advantages are merely exemplary and are not to be construed as limiting the inventive concept. The present teaching can be readily applied to other types of apparatuses. Also, the description of the exemplary embodiments of the present inventive concept is intended to be illustrative, and not to limit the scope of the claims, and many alternatives, modifications, and variations will be apparent to those skilled in the art.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method for recording content, comprising:

   selecting a content group for recording broadcast content;
   assigning a preset score to the selected content group based on a recording-related history of broadcast content belonging to the selected content group;
   assigning a priority to the selected content group based on the assigned score; and
   scheduling a recording of the broadcast content based on the assigned priority.

2. The method of claim 1, wherein the recording-related history of the broadcast content comprises at least one from among: a recording history of the broadcast content, a viewing history of the broadcast content, and a history of the broadcast content being deleted without being viewed.

3. The method of claim 2, wherein the assigning the preset score comprises assigning the preset score to the content group based on a number of broadcast content which belong to the selected content group and which have the recording-related history.

4. The method of any of claims 1 to 3, further comprising changing the priority of the selected content group when at least one event occurs from among: recording of broadcast content, viewing of broadcast content, deleting of broadcast content, scheduling for broadcast content recording, and an elapse of a preset time interval.

5. The method of any of claims 1 to 4, further comprising setting the priority of the selected content group according to a user's command, wherein the priority of the selected content group set by the user's command is designated as a default priority.

6. The method of any of claims 1 to 5, wherein when a broadcast time of the broadcast content overlaps with a scheduled recording of a second broadcast content, the scheduling comprises scheduling a recording of the broadcast content according to an order of priorities of the selected content group to which the broadcast content belongs and a content group to which the second broadcast content belongs.

7. The method of any of claims 1 to 6, further comprising:

   receiving the scheduled broadcast content; and
   recording the received broadcast content,
   wherein the recording comprises:

       when storage space for recording the scheduled broadcast content is insufficient, comparing the priority of the selected content group to which the scheduled broadcast content belongs with a priority of a content group to which a previously-recorded broadcast content belongs; and
deleting a previously-recorded broadcast content having a lower priority than the priority of the selected content group to which the scheduled broadcast content belongs.

8. The method of any of claims 1 to 6, further comprising:

receiving the scheduled broadcast content; and
recording the received broadcast content,
wherein the recording comprises:

when storage space for recording the scheduled broadcast content is insufficient, comparing the content score of the selected content group to which the scheduled broadcast content belongs with a content score of a content group to which a previously-recorded broadcast content belongs; and
deleting a previously-recorded broadcast content having a lower content score than the content score of the selected content group to which the scheduled broadcast content belongs.

9. The method of claim 8, wherein the content score is assigned based on at least one from among: a frequency of viewing broadcast content; a priority of the content group to which the broadcast content belongs; and a duration of time the broadcast content has been stored at in storage.

10. The method of any of claims 1 to 9, wherein when the selected content group has a plurality of priorities of different levels, setting a priority of the highest level from among the plurality of priorities of different levels as the priority of the selected content group.

11. The method of claim 10, wherein the priority levels of the plurality of priorities ordered from highest to lowest are: priorities given by a user, priorities given by a broadcasting company or a content maker, and priorities given based on the recording-related history.

12. A broadcast receiving apparatus, comprising:

a user interface through which a content group for recording broadcast content is selected;
a controller which assigns a preset score to the selected content group based on a recording-related history of broadcast content belonging to the selected content group, and assigns a priority to the selected content groups based on the assigned scores; and
a scheduling unit which schedules a recording of the broadcast content based on the assigned priority.

13. The broadcast receiving apparatus of claim 12, wherein the recording-related history of the broadcast contents comprises at least one from among: a recording history of the broadcast contents, a viewing history of the broadcast content, and a history of the broadcast contents being deleted without being viewed.

14. The broadcast receiving apparatus of claim 12 or 13, wherein when a broadcast time of the broadcast content overlaps with a scheduled recording of a second broadcast content, the controller schedules a recording of the broadcast content according to an order of priorities of the selected content group to which the broadcast content belongs and a content group to which the second broadcast content belongs.

15. The broadcast receiving apparatus of any of claims 12 to 14, further comprising:

a receiver which receives the scheduled broadcast content; and
a storage which records the received broadcast content, wherein
when storage space for recording the scheduled broadcast contents is insufficient, the controller controls the broadcast receiving apparatus so that the priority of the selected content group to which the scheduled broadcast content belongs is compared with a priority of a content group to which a previously-recorded broadcast content belongs; and
a previously-recorded broadcast content having a lower priority than the priority of the selected content group to which the scheduled broadcast content belongs, is deleted.

# FIG. 1

110

| LIST OF CONTENT GROUPS |
|---|

120 {
This is summary of classic movie group. This
is summary of classic movie group. This is
summary of classic movie group.
This is summary of classic movie group.

Maker: This content group has been made by BBC.

130 √ NEWS

150

SPORTS

140 {
MOVIE

ACTION MOVIE

CLASSIC MOVIE

130 √ MODERN CLASSIC : 2000-2010.

CONFIRM

160

# FIG. 2

```
┌─────────────────┐ S210      ┌─────────────────┐ S230      ┌─────────────────┐ S250
│     SELECT      │           │     RECORD      │           │      VIEW       │
│ CONTENT GROUP   │           │BROADCAST CONTENT│           │BROADCAST CONTENT│
└────────┬────────┘           └────────┬────────┘           └────────┬────────┘
         │                             │                             │
         ▼                             ▼                             ▼
┌─────────────────┐ S220      ┌─────────────────┐ S240      ┌─────────────────┐ S260
│     ASSIGN      │           │    INCREMENT    │           │    INCREMENT    │
│INITIAL PRIORITY │           │RECORDED CONTENT │           │ VIEWED CONTENT  │
└────────┬────────┘           └────────┬────────┘           └────────┬────────┘
         │                             │                             │
         │                             ▼                             ▼
         │            ┌──────────────────────────────────────────────────────┐ S270
         │            │                 CALCULATE METRIC                      │
         │            └──────────────────────────┬───────────────────────────┘
         │                                        │
         │                                        ▼
         │            ┌──────────────────────────────────────────────────────┐ S280
         │            │              CALCULATE GROUP PRIORITY                 │
         │            └──────────────────────────┬───────────────────────────┘
         │      S290                              │
         │    ┌─────────────────────┐             │
         └───▶│   ADJUST PRIORITY   │◀────────────┘
              └─────────────────────┘
```

# FIG. 3

S310 — SCHEDULE RECORDING

S320 — CONFLICT? —N→

↓Y

S330 — IS THERE OTHER WAY TO AVOID CONFLICT? —Y→ CONFIRM SCHEDULING — S350

↓N

S340 — COMPARE PRIORITIES & SELECT BROADCAST CONTENT

# FIG. 4

# FIG. 5

```
                  ┌─S510
        ┌──────────────────┐
        │      SELECT       │
        │  CONTENT GROUP    │
        └──────────────────┘
                  │
                  ▼   ┌─S520
        ┌──────────────────┐
        │      ASSIGN       │
        │  INITIAL PRIORITY │
        └──────────────────┘
```

|  | ┌─S530 |  | ┌─S550 |  | ┌─S555 |
|---|---|---|---|---|---|
| | RECORD CONTENT | | VIEW CONTENT | | DELETE CONTENT |

|  | ┌─S540 |  | ┌─S560 |  | ┌─S565 |
|---|---|---|---|---|---|
| | INCREMENT RECORDED CONTENT | | INCREMENT VIEWED CONTENT | | INCREMENT DELETED CONTENT |

CALCULATE METRIC   ┌─S570

CALCULATE GROUP PRIORITY   ┌─S580

ADJUST PRIORITY   ┌─S590

# FIG. 6

```
                    ┌─────────────────┐
         S610 ─────│   SCHEDULE      │
                    │   RECORDING     │
                    └─────────────────┘
                            │
                            ▼
                         ╱     ╲
                        ╱   IS    ╲        N
         S620 ────────◄ STORAGE SPACE ───────────────────────┐
                        ╲ INSUFFICIENT?╱                       │
                         ╲           ╱                         │
                            │ Y                                │
                            ▼                                  ▼
                    ┌─────────────────┐            ┌─────────────────┐
         S630 ─────│   CALCULATE     │     S680 ──│    RECORD        │
                    │ CONTENT SCORE   │            │    CONTENT       │
                    └─────────────────┘            └─────────────────┘
                            │                               ▲
             S640           ▼                               │
              ╲          ╱       ╲                          │
           N   ╲        ╱ DOES CONTENT ╲    Y     ┌──────────────────┐
          ┌─────◄ HAVE LOWER CONTENT ─────────►│ DELETE CONTENT  │── S660
          │        ╲    SCORE?     ╱            └──────────────────┘
   S650   │         ╲           ╱                        │
     ╲    ▼            ▲                                  ▼
  ┌──────────────┐     │                              ╱       ╲      S670
  │  CONTENT     │     │                  N          ╱    IS     ╲    Y
  │ NOT RECORDED │     └────────────────────────────◄ THERE SPACE FOR ►─┘
  └──────────────┘                                   ╲ RECORDING? ╱
                                                       ╲         ╱
```

# FIG. 7

LIST OF SELECTED CONTENT GROUPS

MODERN CLASSIC : 2000-2010.
SPORTS
MOVIE
    ACTION MOVIE
    CLASSIC MOVIE
LAST WEEK'S BEST    720

NEWS

710

HIGHER PRIORITY

# FIG. 8

LIST OF SELECTED CONTENT GROUPS

730

NEWS

USER MANUALLY
CHANGES "NEWS"
TO TOP PRIORITY

MODERN CLASSIC : 2000-2010.

SPORTS

MOVIE

ACTION MOVIE

CLASSIC MOVIE

LAST WEEK'S BEST

# FIG. 9

# FIG. 10

1000

# FIG. 11

<u>1100</u>

1110

1130

| USER INTERFACE UNIT | SCHEDULING UNIT |

~1120

CONTROL UNIT

# FIG. 12

<u>1200</u>

# FIG. 13

```
          ┌─────────────┐
          │    START    │
          └─────────────┘
                 │
                 ▼
┌────────────────────────────────────┐
│        SELECT CONTENT GROUP         │─── S1310
└────────────────────────────────────┘
                 │
                 ▼
┌────────────────────────────────────┐
│  ASSIGN PRESET SCORE TO CONTENT GROUP │─── S1320
└────────────────────────────────────┘
                 │
                 ▼
┌────────────────────────────────────┐
│    ASSIGN PRIORITY TO CONTENT GROUP   │─── S1330
└────────────────────────────────────┘
                 │
                 ▼
┌────────────────────────────────────┐
│        SCHEDULE RECORDING OF         │─── S1340
│         BROADCAST CONTENT            │
└────────────────────────────────────┘
                 │
                 ▼
          ┌─────────────┐
          │     END     │
          └─────────────┘
```